# EUROPEAN PATENT APPLICATION

(11) **EP 1 265 440 A1**
(43) Date of publication of application: **11.12.2002**
(21) Application number: 99961376.3
(22) Date of filing: 24.12.1999
(51) Int. Cl.: H04N 5/765, H04N 5/76, H04N 5/91, G11B 20/10

(54) **INFORMATION RECORDING/REPRODUCING DEVICE**

(71) Applicant: FUJITSU LIMITED, Kawasaki-shi, Kanagawa 211-8588 (JP)
(72) Inventor: OKADA, Yoshiyuki, Fujitsu Limited, Kawasaki-shi, Kanagawa 211-888 (JP)
(74) Representative: Hitching, Peter Matthew
(86) International application number: JP9907289
(87) International publication number: WO01049025

(57) **Abstract**

An information recording/reproducing device for recording/reproducing information supplied from a multitude of information sources. Primary recording/reproducing is efficiently performed, and charging is properly carried out. Information from information sources are recorded all at a time, and information in a primary recording unit is reproduced or recorded in a secondary recording unit as necessary.

## Description

### Field of the Invention

The present invention relates to information recording/reproducing apparatuses, and more particularly to an information recording/reproducing apparatus for conducting a recording/reproduction of information supplied from a plurality or information sources.

Recently, in a TV broadcast, various programs from various sources of information, such as a satellite broadcast, a ground broadcast, cable TV, and the Internet, are transmitted. However, the program that a viewer can view is restricted to one channel. For this reason, if programs to view and listen to are broadcast at the same time, the viewer can view any one program only. Then, a system by which one viewer can view two or more programs of the same broadcasting hours is desired.

Moreover, images are being digitized more and more, and also digitized for a broadcast program or a videotape-recording device. Deterioration of the image by a copy or a like is reduced by digitizing the image. Then, protection of copyright has been important. For this reason, it is desired that a system can ensure accounting is desired.

### Description of Related Art

After converting a television program received from an analog antenna into digital, a recording apparatus, in which the television program is compressed by a motion picture compression such as MPEG 2 and recorded to a hard disk, has been developed.

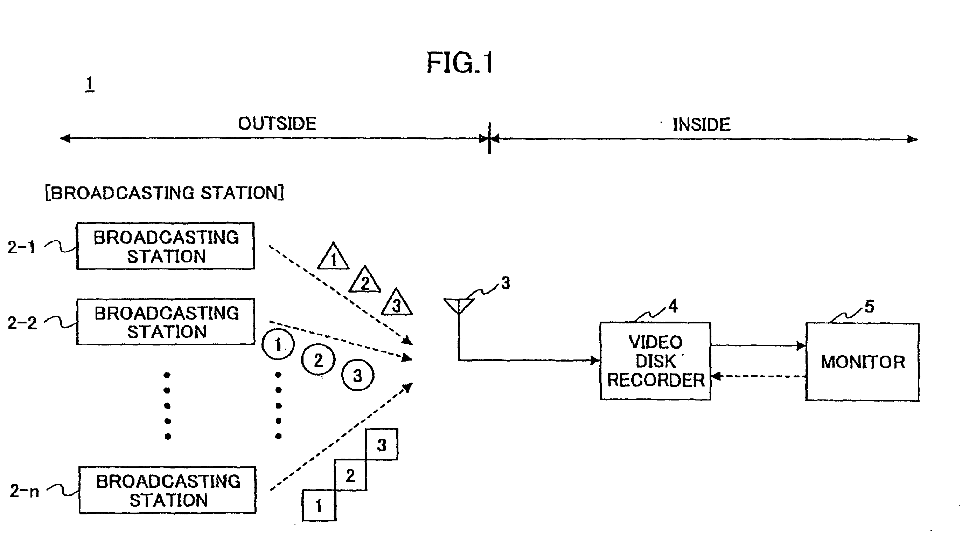

FIG.1 shows an example of a conventional broadcast system.

The conventional broadcast system 1 includes a plurality of broadcasting stations 2-1 through 2-n, an antenna 3, a videodisk recorder 4, and a monitor 5.

Each of the broadcasting stations 2-1 through 2-n sends a program in time series. The antenna 3 receives the broadcast waves from the broadcasting stations 2-1 through 2-n. The videodisk recorder 4 is tuned to an image and a sound signal from a desired broadcasting station from the broadcast waves received with the antenna 3, and records the image and the sound signal on a disk. Moreover, the videodisk recorder 4 reproduces the image and the sound signal which are recorded on the disk.

The monitor 5 displays and outputs the image and the sound signal that are reproduced from the disk by the videodisk recorder 4 while displaying and outputting the image and the sound signal from the broadcasting station that are tuned by the videodisk recorder 4.

Next, the videodisk recorder 4 will be described in detail.

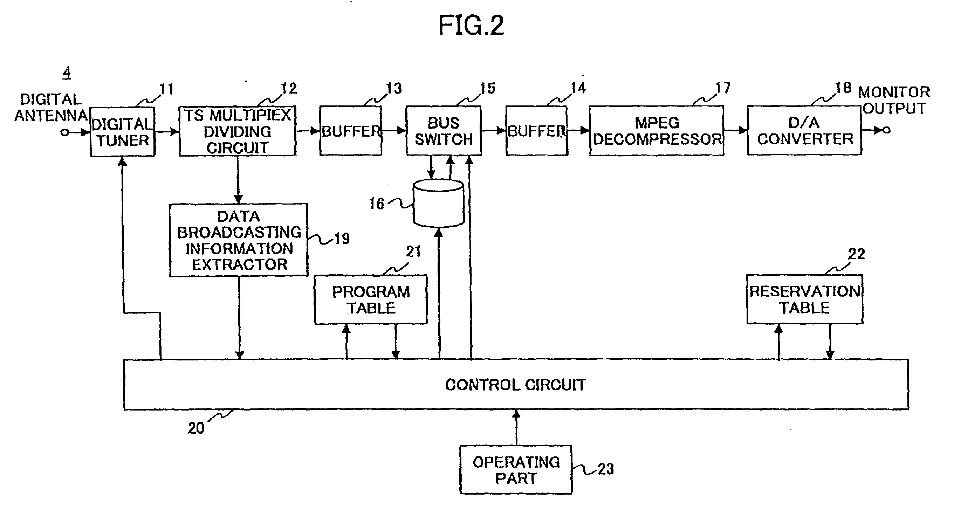

FIG.2 shows a block diagram showing an example of a conventional videodisk recorder.

The conventional videodisk recorder 4 includes a digital tuner 11, a multiplex dividing circuit 12, buffers 13 and 14, a bus switch 15, a hard disk drive 16, a decompression circuit 17, a D/A conversion circuit 18, a data-broadcasting information extracting circuit 19, a control circuit 20, a program table 21, a reservation table 22, and an operating part 23.

The digital tuner 11 is connected to the antenna 3, and tunes to a signal from a desired broadcasting station from the broadcasting stations 2-1 through 2-n. The signal tuned by the digital tuner 11 is supplied to the multiplex dividing circuit 12.

The multiplex dividing circuit 12 divides channel data from data multiplexed by the tuned signal. Divided channel data are supplied to the buffer 13. The buffer 13 temporarily stores the channel data. The channel data stored by the buffer 13 are supplied to the bus switch 15.

The bus switch 15 selectively outputs either of the channel data stored by the buffer 13 or the channel data read from the hard disk drive 16 while supplying the channel data to the hard disk drive 16. The channel data output from the bus switch 15 are supplied to the buffer 14. The buffer 14 temporarily stores the channel data from the bus switch 15.

The channel data stored in the buffer 14 are supplied to the decompression circuit 17. The decompression circuit 17 decompresses the data compressed by a compression method such as MPEG2 at the broadcasting stations 2-1 through 2-n, to original image data. The image data decompressed by the decompression circuit 17 are supplied to the D/A conversion circuit 18. The analog video signal converted by the D/A conversion circuit 18 is supplied to the monitor 5.

Moreover, the data-broadcasting information extracting circuit 19 extracts data-broadcasting information from data supplied from the multiplex dividing circuit 12. The data-broadcasting information is supplied to the control circuit 20. The control circuit 20 controls the digital tuner 11 according to an operation from the operating part 23. Moreover, the control circuit 20 stores data-broadcasting information in the program table 21. Furthermore, the control circuit 20 creates the reservation table 22 according to the operation from the operating part 23.

The control circuit 20 controls to read the channel data from the hard disk drive 16 while controlling hard disk drive 16 based on an operation from the operating part 23 and reservation data from the reservation table 22 and recording the channel data to the hard disk drive 16.

In addition, the broadcast system 1 described above is an example applied to a digital broadcasting system, and can be applied to an analog broadcast.

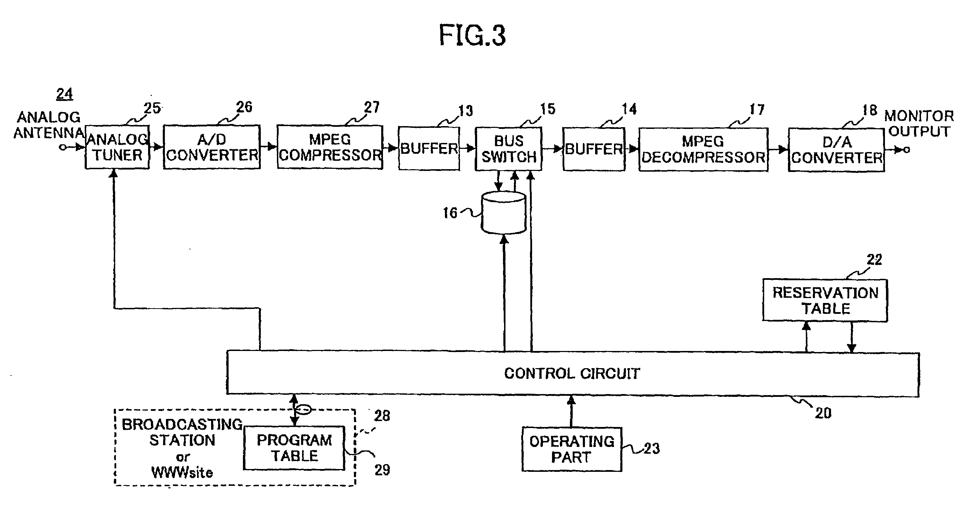

FIG.3 shows a block diagram of the videodisk recorder of an analog method as a conventional example. In FIG.3, those components that are the same as the components of FIG.2 are designated by the same reference numerals, and the description thereof is omitted.

The videodisk recorder 24 of an analog method receives an analog broadcasting wave, and can record the analog broadcasting wave. In FIG.3, the analog tuner 25 tunes a signal of a desired broadcasting station from signals from the antenna 4. The signal from the broadcasting station tuned by the analog tuner 25 is supplied to the A/D conversion circuit 26.

The A/D conversion circuit 26 converts the signal from the analog tuner 25 into digital data. The digital data converted by the A/D conversion circuit 26 are supplied to the compression circuit 27.

The compression circuit 27 compresses the digital data using a compression method such as MPEG2. The digital data compressed by the compression circuit 27 are supplied to the buffer 13.

Since program information is not superimposed for the signal from the broadcasting station, the program table 30 of the broadcasting station is set by accessing a broadcasting station 29 through a telephone line 28.

A record operation of the conventional videodisk recorders 4 and 24 will now be described.

First, a primary recording operation will be described.

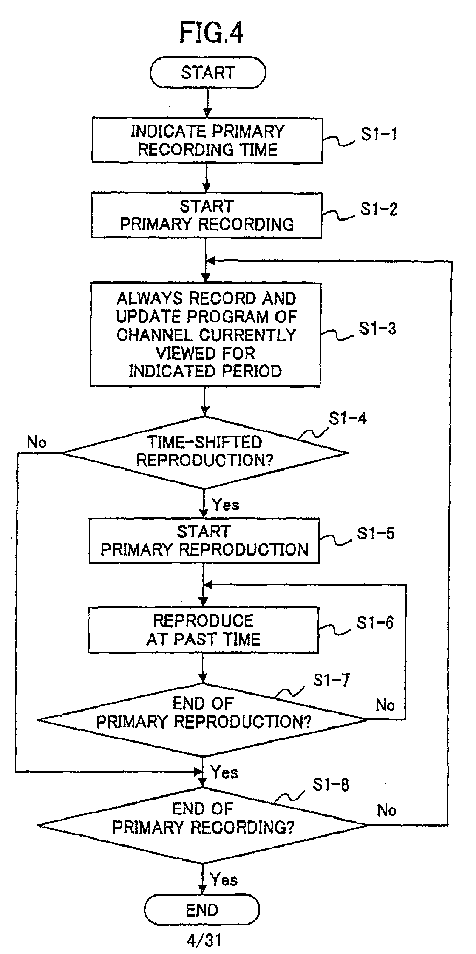

FIG.4 shows the flowchart of the primary recording operation of the conventional videodisk recorder.

First, in step S1-1, a primary-recording time is indicated by the viewer. When the primary-recording time indicated in step S1-1 arrives, the primary recording is started in step S1-2.

When the primary recording is started in step S1-2, in step S1-2, the program of the channel being viewed is always recorded and updated at an indicated time. When the primary recording operation is started in step S1-3, it is determined whether a time shift reproduction is indicated by the viewer in step S1-4.

When it is determined in step S1-4 that the time-shift reproduction is indicated, the primary reproduction is started in step S1-5. When the primary reproduction is started in step S1-5, a time is returned by a time difference and a reproduction is performed in step S1-6, that is, the reproduction for a time shift is conducted.

While conducting the reproduction for the time shift in step S1-6, it is determined in step S1-7 whether an end of the primary reproduction is indicated by the viewer. When the end of primary reproduction is not indicated by the viewer in step S1-7, the primary recording operation goes back to step S1-6 and then the reproduction for time shift is conducted.

When the end of primary reproduction is indicated by the viewer in step S1-7, it is determined in step S1-8 whether the, end of the primary recording is indicated by the viewer.

When it is determined in step S1-8 that the end of a primary recording is not indicated by the viewer, the primary recording operation goes back to step S1-3 and then the primary recording is continued. Moreover, the primary recording operation is terminated by an indication of the end of the primary recording by the viewer in step S1-8.

Next, a secondary recording operation will be described.

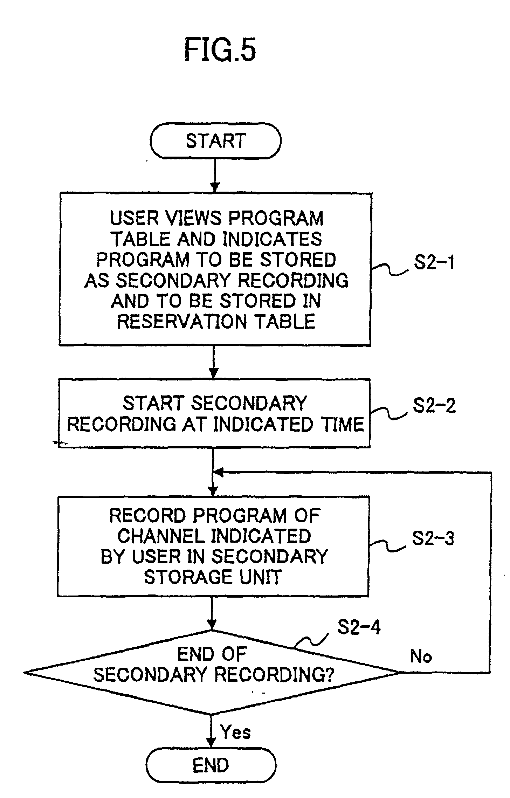

FIG.5 shows a flowchart of a conventional example of a secondary recording operation.

First, in step S2-1, a program to be recorded on a reservation table is set by the viewer specifying the program to record with reference to the program table. When in step S2-1, the current time is the time when the program is to be recorded on the reservation table, secondary recording is started in step S2-2.

When the secondary recording is started in step S2-2, in step S2-3, the indicated program is recorded on the hard disk drive as secondary recording information or recorded to a secondary storage unit that is separately provided. When the secondary recording is started in step S2-3, it is periodically determined in step S2-4 whether the secondary recording is completed.

when it is determined in step S2-4 that the secondary recording is not completed, the secondary recording operation goes back to step S2-3 and the secondary recording is continued. Then, the secondary recording operation is terminated when the secondary recording is completed.

In addition, no function of copy protection is provided in the conventional information recording/reproducing apparatus. For this reason, the recorded image is digitized. Then, there is no degradation of an image quality. Accordingly, it is possible to copy without degrading the image quality, and protection of copyrights is no longer enforced.

However, the primary recording/reproducing in the conventional image recording/reproducing apparatus goes back in time, and allows viewing the program. The so-called time shift is the purpose. A time shift is used to temporarily record information. When a certain period passes, the information recorded by the primary recording is deleted. Moreover, it is impossible to trace back any programs other than the reserved program, and it is impossible to watch them. Thus, it is not possible to efficiently conduct the primary recording/reproducing.

Moreover, in the conventional image recording/reproducing apparatus, a digital recording is conducted. The image quality is not degraded by this digital recording. Therefore, the protection of copyrights of the image contents from a broadcasting station or a movie distributor has been an important subject. The conventional image recording/reproducing apparatus stores the encrypted information, and decrypts and reproduces the encrypted information when the encrypted information is viewed. However, if the image contents are recorded on the recording medium with an encryption key, it is possible for other reproducing apparatuses to reproduce the image contents later.

Considering the problems described above, an object of the present invention is to provide an information recording/reproducing apparatus that can effectively conduct a primary recording/reproducing,

Another object of the present invention is to provide an information recording/reproducing apparatus that can charge a viewer for the image contents with certainty.

### Summary of the Invention

In the present invention, an information recording/reproducing apparatus for recording information from a plurality of information sources, includes a first recording part recording a plurality of sets of information from the plurality of information sources, an indicating part indicating desired information, and a read-out controlling part reading out the desired information indicated by the indicating part. According to the present invention, information from the plurality of information sources is recorded to the first recording part and information, which is simultaneously broadcasted, is indicated. Therefore, it is possible to selectively view the information.

Moreover, the present invention may include a reproducing part reproducing information read out from the read-out control part. According to the present invention, it is possible to reproduce and view the information recorded in the first recording part by the reproducing part.

Furthermore, the present invention may include a second recording part recording the information read out from the read-out control part. According to the present invention, it is possible to record necessary information from information recorded in the first recording part by the second recording part.

The present invention may include a compressing part compressing a plurality of sets of information, and the information is compressed and recorded to the first recording part. According to the present invention, the information is compressed by the compressing part and recorded to the first recording part, so that more information can be recorded in the first recording part.

The present invention may include a decompressing part decompressing information from the read-out control part. According to the present invention, it is possible to record/reproduce compressed information by providing the decompressing part.

The present invention may include a record information setting part setting a plurality of sets of information and a time to be recorded. According to the present invention, it is possible to selectively set information and the time to be recorded to the first recording part by the record information setting part.

The present invention may include a first timetable creating part creating a first timetable based on the plurality of information recorded in the first recording part. According to the present invention, by referring to the first timetable, it is possible to easily recognize the information recorded in the first recording part.

The present invention may includes a second timetable creating part creating a second timetable based on a transmission plan information supplied from the plurality of information sources beforehand. According to the present invention, by referring to the second timetable, it is possible to recognize and set information to be recorded to the first recording part beforehand.

The present invention may include a read-out information setting part setting desired information based on the first or the second timetable. According to the present invention, by referring to the first or the second timetable, it is possible to easily record or set information to view.

The present invention may allow the second recording part to simultaneously record desired information from information being recorded in the first recording part. According to the present invention, by simultaneously recording information to the first and the second recording parts, it is possible to reduce information to record from the first recording part to the second recording part.

The present invention allows the second recording part to simultaneously record desired information of information being recorded to the first recording part when recording in the middle of the desired information, and to record a part of the desired information, which is not being recorded in the first recording part when completing recording the desired information. According to the present invention, when the information is simultaneously recorded to the second recording part in the middle of recording-the desired information to the first recording part, the part of the desired information, that has not being recorded in the second recording part, is recorded from the first recording part to the second recording part. It is possible to reduce the record time of the second recording part.

The present invention may include the first recording part for each monitor. According to the present invention, it is possible to freely use the first recording part by each viewer.

The present invention may share the first recording part with a plurality of monitors. According to the present invention, effective management can be realized by sharing the first recording part with the plurality of monitors.

In the present invention, the information recording/reproducing apparatus for recording/reproducing information includes a recording/reproducing part recording/reproducing encrypted information, a decrypting part decrypting information reproduced by said recording/reproducing part, and a billing control part prohibiting decrypting by said decrypting part in accordance with a billing state. According to the present invention, it is possible with certainty to charge a billing by recording information being encrypted, to the recording/reproducing part.

The present invention may include an encrypting part encrypting information supplied from an external unit. According to the present invention, it is possible certainty to charge a billing for information that is not encrypted but supplied.

In the present invention, the billing control part may include a billing determining part determining the billing state, an encrypting key generating part generating and supplying an encrypting key to said decrypting part, and a decryption permitting part permitting decryption by the decrypting part when it is determined that the billing is charged by said billing determining part. According to the present invention, the decrypting part is controlled based on a billing state, so that it is possible to control viewing information based on the billing state.

The present invention may encrypt information beforehand. According to the present invention, it is not necessary to encrypt at a side of the apparatus.

In the present invention, the recording/reproducing part may be configured so as to simultaneously record and reproduce information. According to the present invention, it is possible to reproduce while recording and it is possible for the viewer to flexibly view the information.

### Brief Description of the Drawings

FIG.1 is a diagram showing an example of a conventional system configuration;
FIG.2 is a block diagram showing an example of a conventional videodisk recorder;
FIG.3 is a block diagram showing an example of a conventional videodisk recorder of an analog method;
FIG.4 is a flowchart for a primary recording operation of a conventional videodisk recorder;
FIG.5 is a flowchart for an example of a conventional secondary recording operation;
FIG.6 is a diagram showing a system configuration according to a first embodiment of the present invention;
FIG.7 is a block diagram showing a videocassette recorder according to the first embodiment of the present invention;
FIG.8 is a flowchart for a process of a primary recording, according to the first embodiment of the present invention;
FIG.9 is a diagram for explaining an operation of the primary recording, according to the first embodiment of the present invention;
FIG.10 is a flowchart for a process of a variation of the primary recording, according to the first embodiment of the present invention;
FIG.11 is a flowchart for a process at a time of reproducing primary recording information, according to the first embodiment of the present invention;
FIG.12 is a diagram for explaining an operation at a time of reproducing primary recording information, according to the first embodiment of the present invention;
FIG.13 is a flowchart for a secondary recoding operation, according to the first embodiment of the present invention;
FIG.14 is a flowchart for a variation of a secondary recording, according to the first embodiment of the present invention;
FIG.15 is a block diagram showing a variation of the videocassette recorder according to the first embodiment of the present invention;
FIG.16 is a diagram showing a system configuration according to a second embodiment of the present invention;
FIG.17 is a block diagram showing a configuration of a home server according to the second embodiment of the present invention;
FIG.18 is a flowchart for a primary recording/reproducing operation according to the second embodiment of the present invention;
FIG.19 is a block diagram showing a variation of the home server according to the second embodiment of the present invention;
FIG.20 is a diagram showing a system configuration according to a third embodiment of the present invention;
FIG. 21 is a block diagram showing configuration of a server according to the third embodiment of the present invention;
FIG.22 is a block diagram showing a configuration of a videocassette recorder according to a fourth embodiment of the present invention;
FIG.23 is a diagram showing a data structure of a memory according to the fourth embodiment of the present invention;
FIG.24 is a block diagram showing a configuration of a billing control part according to the fourth embodiment of the present invention;
FIG.25 is a flowchart at a time of recording, according to the fourth embodiment of the present invention;
FIG.26 is a flowchart for a process at a time of reproducing, according to the fourth embodiment of the present invention;
FIG.27 is a block diagram showing a configuration according to a fifth embodiment of the present invention;
FIG.28 is a block diagram showing a configuration of a billing control part according to the fifth embodiment of the present invention;
FIG.29 is a flowchart at a time of recording, according to the fifth embodiment of the present invention;
FIG.30 is a flowchart at a time of reproducing, according to the fifth embodiment of the present invention; and
FIG.31 is a flowchart at a time of a time shift reproduction according to the fifth embodiment.

### Detailed Description Of The Preferred Embodiments

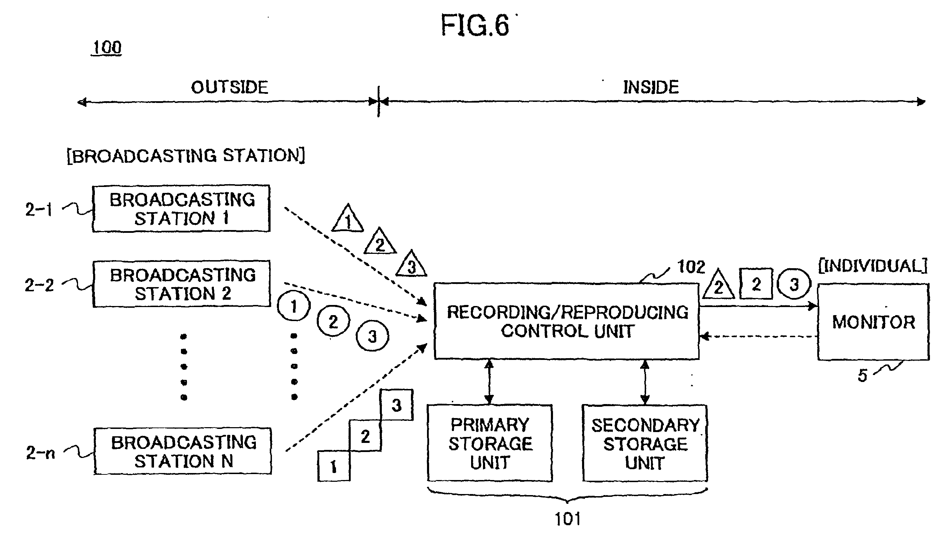

FIG.6 shows a block diagram of a system configuration according to a first embodiment of the present invention. In FIG.6, those components that are the same as the components of FIG.1 are designated by the same reference numerals, and the description thereof is omitted.

In a broadcast receiving system 100 according to this embodiment, broadcasting stations 2-1 through 2-n transmit digital image data. The digital image data transmitted from the broadcasting stations 2-1 through 2-n are compressed in accordance with MPEG 2.

A videocassette recorder 101 is provided at home for a viewer. A videocassette recorder 101 is connected to an antenna, a cable, or a like, and records image data supplied from the broadcasting stations 2-1 through 2-n via the antenna, the cable, or the like.

The videocassette recorder 101 includes a recording/reproducing control unit 102, a primary storage unit 103, and a secondary storage unit 104. The recording/reproducing control unit 102 controls recording/reproducing the image data from the broadcasting stations 2-1 through 2-n. The primary storage unit 103 records the image data by a primary recording. The primary storage unit records the image data as data primarily recorded, and includes a hard disk drive and a like.

The secondary storage unit 104 records the image data transmitted from the broadcasting stations 2-1 through 2-n as data secondarily recorded, and records the image data stored in the primary storage unit 103 as data secondarily recorded. The secondary storage unit maintains recorded image data, and includes a VTR, a magneto-optical disk drive, a DVD-RAM, or a like. In addition, an image is supplied in a form called GOP (Group Of Picture) making various image data to be a single set of image data.

Next, the videocassette recorder 101 will be described in detail.

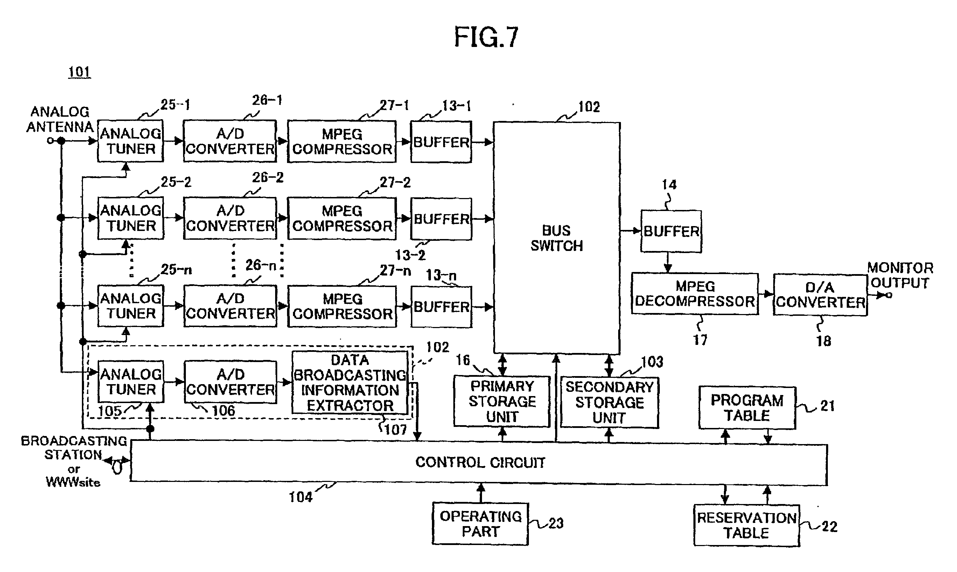

FIG.7 shows a block diagram of the videocassette recorder according to the first embodiment of the present invention. In FIG.7, those components that are the same as the components of FIG.3 are designated by the same reference numerals, and the description thereof is omitted.

The videocassette recorder 101 according to the first embodiment includes n analog tuners 25-1 through 25-n, n A/D-converting circuits 26-1 through 26-n, n compressing circuits 27-1 through 27-n, n buffers 13-1 through 13-n, a program information obtaining part 102, a secondary storage unit 103, and a control unit 104.

The analog tuner 25-1 tunes to the broadcasting station 2-1. The analog tuner 25-2 tunes in the broadcasting station 2-2. Similarly, the analog tuner 25-n tunes to the broadcasting station 2-n.

The signals tuned to by the analog tuners 25-1 through 25-n are supplied to the A/D-converting circuits 26-1 through 26-n. Digital data converted by the A/D-converting circuits 26-1 through 26-n are supplied to the compressing circuit 27-1. The compressing circuit 27-1 compresses converted digital data. For example, a method such as MPEG 2 is applied as a compression method in the compressing circuit 27-1. However, the compression method is not limited to this method.

The digital data compressed by the compressing circuits 27-1 through 27-n are supplied to the buffers 13-1 through 13-n. The buffers 13-1 through 13-n primarily record the digital data from the compressing circuits 27-1 through 27-n. The digital data maintained by the buffers 13-1 through 13-n are supplied to the bus switch 101.

The bus switch 101 controls supplying the digital data from the control circuit 104 to the primary storage unit 16, the secondary storage unit 103, and the buffer 14 by the control circuit 104. The primary storage unit 16 records the digital data from the buffers 13-1 through 13-n. The secondary storage unit 103 records a program directed by the viewer from a plurality of programs recorded on the primary storage unit 16.

The secondary storage unit 103 selectively records the digital data from the buffers 13-1 through 13-n or the primary storage unit 16. The program information obtaining part 102 includes an analog tuner 105, an AID-converting circuit 106, and a data-broadcasting information extracting part 107.

The analog tuner 105 tunes to a signal in which data-broadcasting information is included. The signal tuned to by the analog tuner 105 is supplied to the A/D-converting circuit 106. The AID-converting circuit 106 converts the supplied signal into digital data. The digital data converted by the A/D-converting circuit 106 is supplied to the data-broadcasting information extracting part 107.

The data-broadcasting information extracting part 107 extracts the data-broadcasting information from digital data. Data-broadcasting information is supplied to the control circuit 104. The control circuit 104 creates a program table 21 from the data-broadcasting information.

Next, a primary recording operation by the control circuit 104 will be described in detail. In addition, in a primary recording, information from the broadcasting station set beforehand is repeatedly recorded during a recording time that is set beforehand.

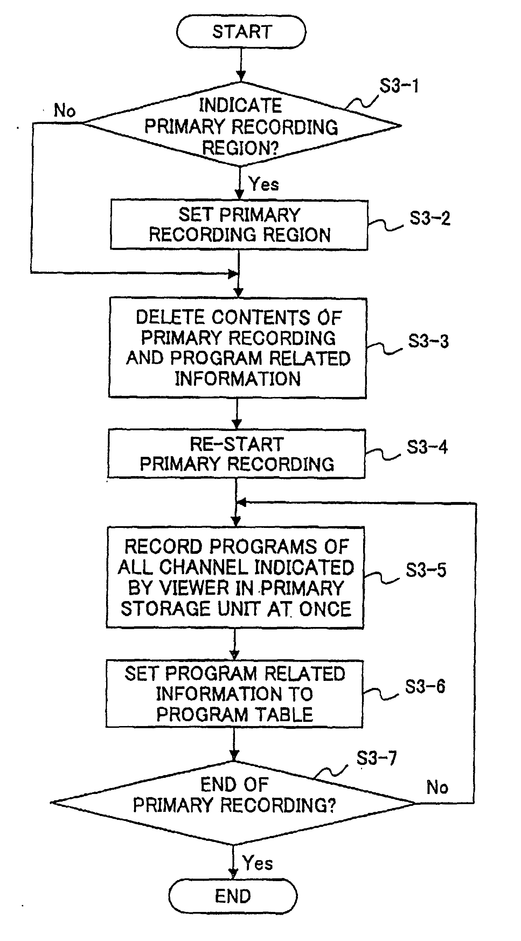

FIG.8 shows a process flowchart of a primary recording according to the first embodiment of the present invention.

Step S3-1 determines a presence of an indication of the recording span by the viewer. Indicated recording region includes a primary recording time and the broadcasting station.

When it is determined that the recording region is indicated by the viewer in step S3-1, the primary recording time and the broadcasting station indicated by the viewer are set in the control circuit 104.

Next, in step S3-3, the information primarily recorded in the primary storage unit 16 and the contents recorded in the program table 22 are deleted.

When the information primarily recorded in the primary storage unit 16 and the contents recorded in the program table 22 are deleted in step S3-3, a the primary recording start is indicated to the primary storage unit 16 in step S3-4. When the primary recording start is indicated in step S3-4, information from the broadcasting station, which is indicated in step S3-2, is recorded in step S3-5. When it starts to record the information in step S3-5, program related information of the program recorded is recorded to the program table 22.

Next, it is determined in step S3-7 whether or not the primary recording is continued. When it is determined in step S3-7 that the primary recording is continued, the primary recording operation goes back to step S3-5 and then the information from the indicated broadcasting station is successively recorded.

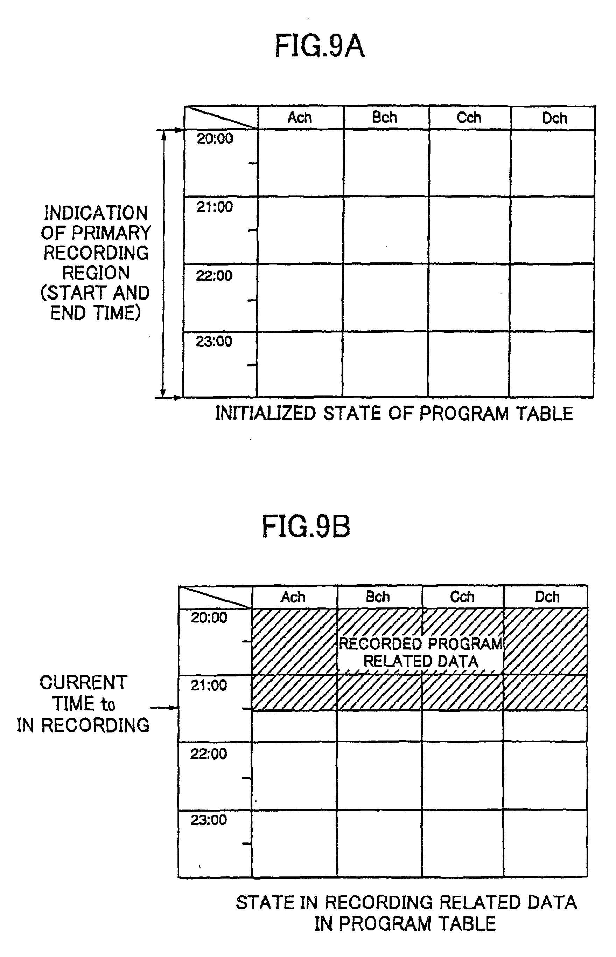

FIG.9 shows a diagram for explaining the primary recording operation according to the first embodiment of the present invention. FIG.9(A) is a diagram showing an indication of the primary recording region by the viewer. FIG.9(B) is a diagram showing a state of updating the program table.

If the start time "20:00" of the primary recording, the end time "23:00" of the primary recording, and channels "A" through "D" are set by the viewer, a table as shown in FIG.9(A) is set to the program table 22.

By setting as described above, programs of the channels "A" through "D" from the start time "20:00" to the end time "23:00" are recorded in the primary storage unit 16.

When a current time t0 arrives, the program related information of the program of the channels "A" through "0" from "20:00" to "21:30" as shown by oblique lines in FIG,9(B), which is recorded in the primary storage unit 16, is recorded in the program table 22. It is possible to recognize which program is being recorded, by displaying the program table on the monitor 5.

In addition, in the primary recording described above, the program related information is recorded on the program table 22 while the programs are being recorded. Alternatively, the program related information of the primary recording region set by the viewer in step S3-2 is obtained before starting the primary recording, and then the primary recording may be conducted.

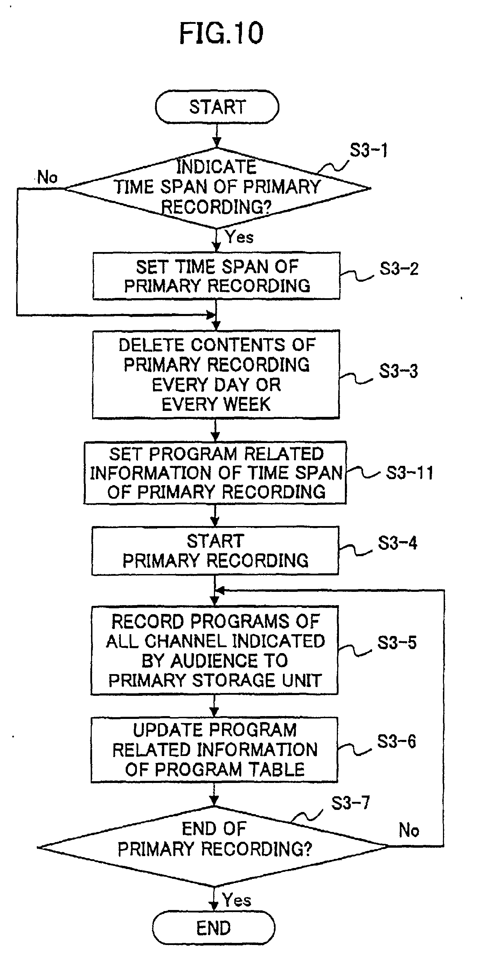

FIG.10 shows a process flowchart of a variation of the primary recording according to the first embodiment of the present invention. In FIG.10, those parts that are the same as the parts of FIG.8 are designated by the same reference numerals, and the description thereof is omitted.

In this variation, step S3-11 is executed after step S3-3. In step S3-11, all program related information of the primary recording region is recorded in the program table 22. Moreover, in step S3-6, latest program information is obtained and the program table 22 is updated.

Next, reproduction of the primary recorded information will be described.

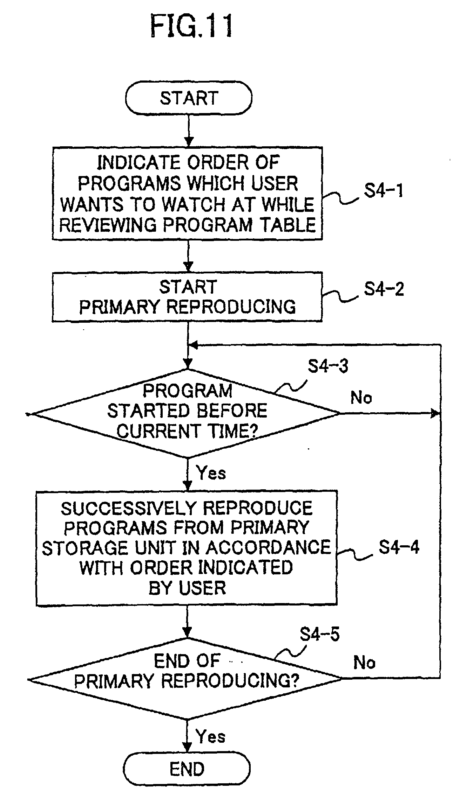

FIG.11 shows a process flowchart at a time of reproducing the primary recording information according to the first embodiment of the present invention.

Step S4-1 is a step in which a program that the viewer wants to view is indicated from the program table 22 by the viewer. After it is complete to select the program to view by the viewer, a reproduction start is indicated in step S4-2.

It is determined in step S4-3 whether or not the start time of the program indicated by the viewer is before the current time. When it is determined in step S4-3 that the start time is before the current time, the program indicated in step S4-4 is read from the primary storage unit 16 and reproduced. In addition, when a plurality of programs are indicated by the viewer in step S4-1, the plurality of programs are reproduced in the order as the plurality of programs are indicated.

Next, it is determined in step S4-5 whether or not the primary recording is continued. When it is determined in step S4-5 that the primary recording is continued, the process goes back to step S4-3 and reproduces another program indicated by the viewer.

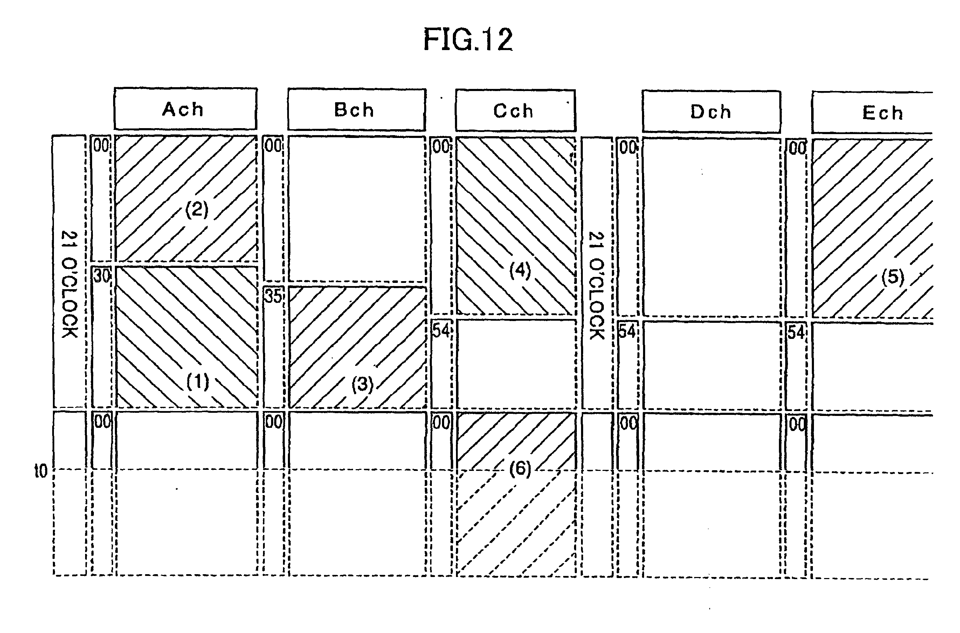

FIG.12 is a diagram for explaining an operation at a time of reproducing the primary recording information according to the first embodiment of the present invention.

A time t0 in FIG.12 shows the current time. All information of the channels "A" through "E" after time "21:00" is recorded.

By the viewer, a program of the channel A between "21:30" and "22:00" is set as a reproduction order (1), a program of the channel A between "21:00" and "21:30" is set as a reproduction order (2), a program of the channel B between "21:35" and "22:00" is set as a reproduction order (3), a program of the channel C between "21:00" and "21:54" is set as a reproduction order (4), a program of the channel E between "21:00" and "21:54" is set as a reproduction order (5), and a program of the channel C between "22:00" and "22:54" is set as a reproduction order (6).

The control circuit 104 reproduces a program from the primary storage unit 16 in the order of (1) through (6). The viewer can view and listen to the programs in the indicated order as mentioned above. Moreover, the viewer can choose and view all the indicated time spans from the programs.

Next, a secondary recording operation is described in detail.

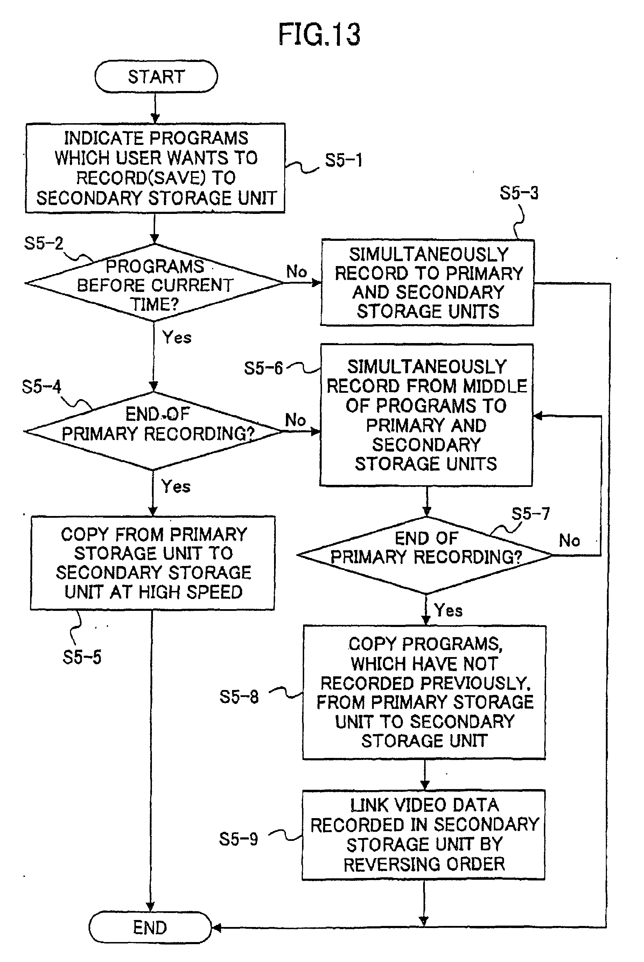

FIG.13 shows a flowchart for the secondary recording operation according to the first embodiment of the present invention.

In step S5-1, the viewer indicates a program to the secondary storage unit 103. When the viewer indicates a program for a secondary recording in step S5-1, the viewer determines whether or not a start time of the program indicated by the viewer is before the current time in step S5-2.

When it is determined that the program indicated by the viewer is not before the current time in step S5-2, in step S5-3, the program indicated by the viewer is simultaneously recorded to the primary storage unit 16 and the secondary storage unit 103 when the start time arrives.

When the primary recording is complete for the program indicated by the viewer in step S5-4, a high-speed duplicate is made for the program indicated by the viewer from the primary storage unit 16 to the secondary storage unit 103. Since data are moved to the secondary storage unit 103 from the primary storage unit 16 only when the primary recording is complete, it is possible to record to the secondary storage unit 103 at high speed because it is not necessary to record in accordance with the progress of viewing the program.

Moreover, when the program indicated by the viewer is in the middle of the primary recording in step S5-4, the secondary recording is started to the secondary storage unit 103 in step S5-6.

Next, it is determined in step S5-7 whether or not the primary recording is completed for the program indicated by the viewer. When the primary recording is completed for the program indicated by the viewer in step S5-7, subsequently, a remaining part of the program indicated in step S5-8 is duplicated from the primary storage unit 16 to the secondary storage unit 103.

When the remaining part of the program indicated by the viewer is duplicated from the primary storage unit 16 to the secondary storage unit 103 in step S5-8, information recorded in the secondary storage unit 103 is edited in a time sequence in step S5-9.

It should be noted that the secondary recording is conducted for the program indicated by the viewer, but the secondary recording may be automatically conducted in accordance with a genre that the viewer indicates beforehand.

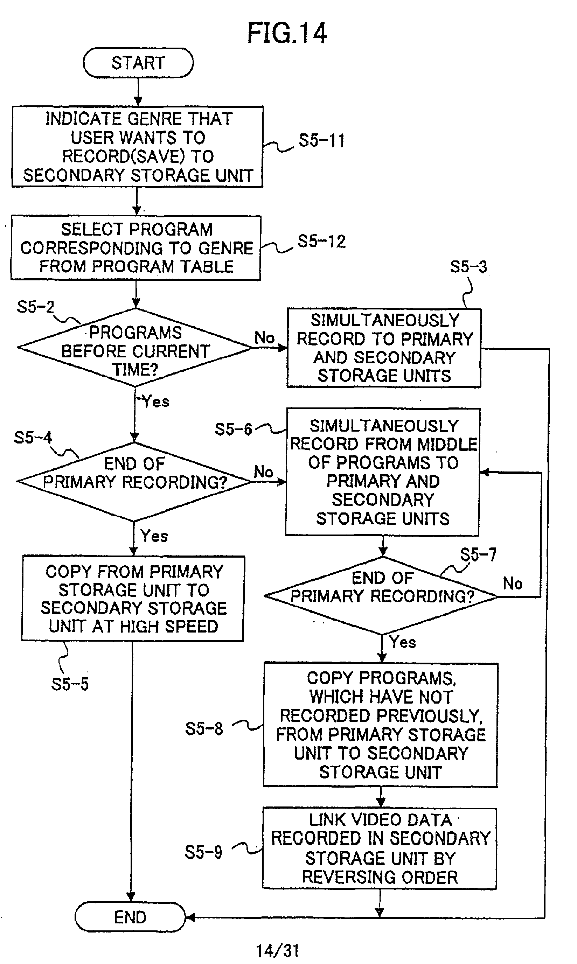

FIG.14 is a flowchart showing a variation of the secondary recording according to the first embodiment of the present invention. In FIG.14, those parts that are the same as the parts of FIG.13 are designated by the same reference numerals, and the description thereof is omitted.

The genre, which the viewer wants to conduct the secondary recording, is indicated by the viewer in step S5-11. When the genre is indicated in step S5-11, programs in the genre indicated by the viewer are selected from the program related information of the program table 22 in step S5-12. It should be noted that information to identify the genre is included in the program related information beforehand.

In addition, in this embodiment, the videocassette recorder of an analog method is described, but also, a videocassette recorder of a digital method can be applied.

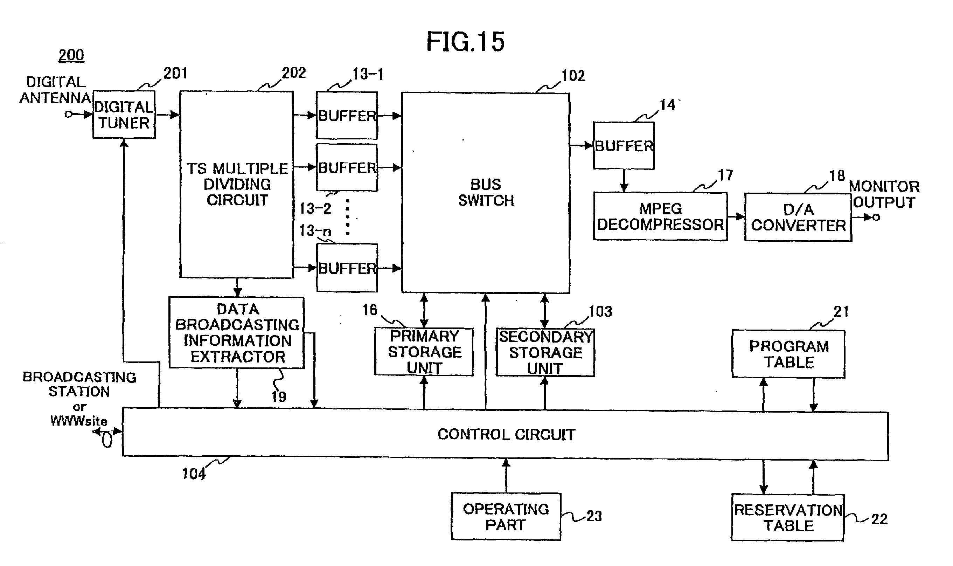

FIG.15 shows a block diagram of a variation of the videocassette recorder according to the first embodiment of the present invention. In FIG.15, those parts that are the same as the parts of FIG.7 are designated by the same reference numerals, and the description thereof is omitted.

The videocassette recorder 200 in this variation provides a multiplex dividing circuit 202, instead of the analog tuners 25-1 through 25-n. The digital tuner 201 is configured so as to be capable of simultaneously selecting n channels from digital broadcasting stations.

The videocassette recorder 200 in the configuration described above is capable for the digital broadcasts. Moreover, the analog tuners 5-1 through 25-n and the digital tuner 201 can be combined, so that the videocassette recorder 200 can be for both the analog broadcast and the digital broadcast.

Moreover, in this embodiment, the primary recording is conducted for each viewer, but the videocassette recorder can be shared, and necessary programs are distributed to the videocassette recorder.

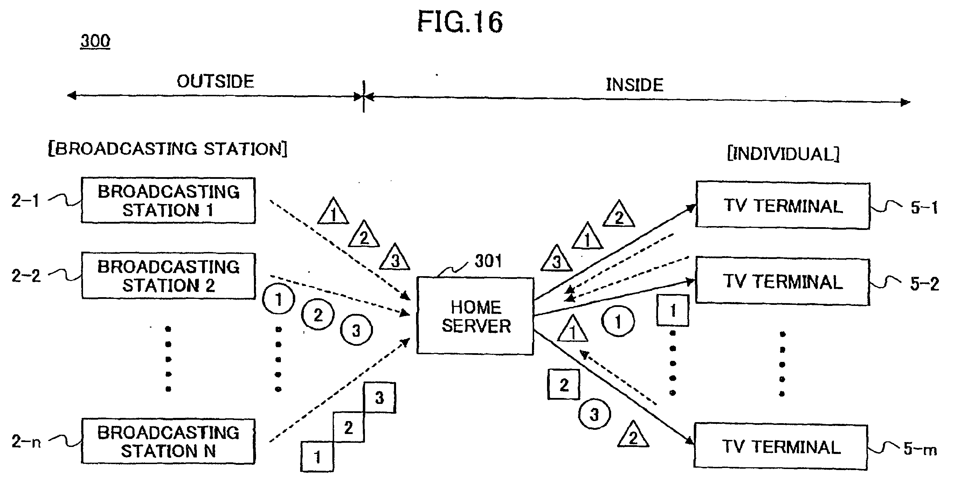

FIG.16 shows a diagram of a system configuration according to a second embodiment of the present invention. In FIG.16, those parts that are the same as the parts of FIG.6 are designated by the same reference numerals, and the description thereof is omitted.

In the broadcasting system 300, the videocassette recorder is provided in a home server 301 inside a house. In home server 301, monitors 5-1 through 5-m are connected to the home server 301.

The home server 301 is arranged at a predetermined place inside the house.

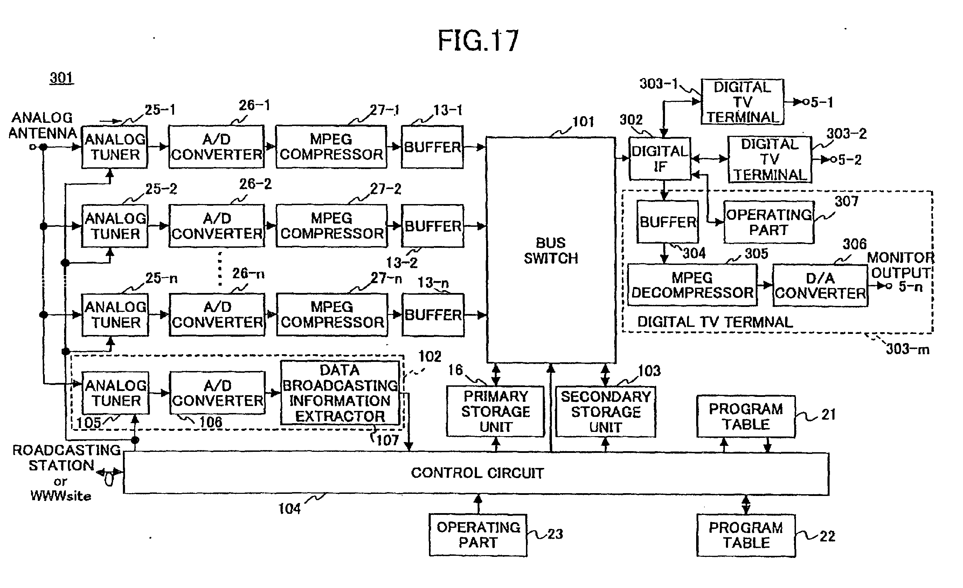

FIG.17 shows a block diagram of the home server according to the second embodiment of the present invention. In FIG.17, those components that are the same as the components of FIG.6 are designated by the same reference numerals, and the description thereof is omitted.

The home server 301 in this embodiment includes a digital interface 302, and digital TV terminals 303-1 through 303-m. The digital interface 302 is provided between the switch bus 101 and the control circuit 104, and the digital TV terminals 303-1 through 303-m, and interfaces the switch bus 101 and the control circuit 104 with the digital TV terminals 303-1 through 303-m.

The digital TV terminals 303-1 through 303-m include a buffer 304, a decompressing circuit 305, a D/A converting circuit 306, and an operating part 307. The buffer 304 temporarily stores information from the digital interface 302. The information stored in the buffer 304 is supplied to the decompressing circuit 305. The decompressing circuit 305 decompresses the information compressed by compressing circuits 27-1 through 27-n to be original information.

The D/A converting circuit 306 converts decompressed information into an analog signal. The analog signal converted by the D/A converting circuit 306 is supplied to the monitors 5-1 through 5-m. The operating part 307 transmits indications from the viewers of monitors 5-1 through 5-m. The indications input from the operating part 307 are supplied to the control circuit 104 through the digital interface 302.

Next, a primary recording/reproducing operation will be described in detail.

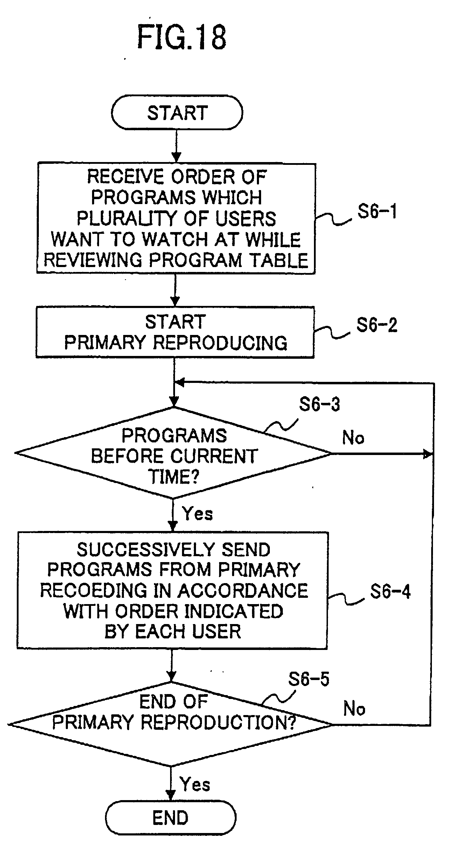

FIG.18 is a flowchart of the primary recording/reproducing operation according to the second embodiment of the present invention.

First, in step S6-1, at least one viewer of the viewers of the monitors 5-1 through 5-m indicates programs that the viewer wants to view. The viewer indicates by operating the operating part 307 of one of the digital TV terminals 303-1 through 303-m.

An indication from the operating part 307 is provided to the control circuit 104 through the digital interface 302.

When the viewer indicates the programs that the viewer wants to views in step S6-1, a reproduction starts from the primary storage unit 16 in step S6-2. Step S6-3 is a step of determining whether or not the programs indicated by the viewer are recorded by the primary recording before a current time t0.

When it is determined in step S6-3 that the programs indicated by the viewer are the programs recorded by the primary recording before the current time, next, the programs indicated by the viewer in step S6-4 are read out and transmitted to the viewer who indicated the programs. In this case, if the viewer indicates the reproduction order of the programs, the programs are reproduced in the reproduction order indicated by the viewer.

In addition, in step S6-5, it is determined whether or not the primary reproducing is stopped. When the viewer indicates to stop the primary reproducing in step S6-5, the primary reproducing is terminated. Moreover, when there is no indication to stop the primary recording in step S6-5, the process goes back to step S6-3 and the primary reproducing is continued.

When the viewer indicates to conduct the secondary recording, programs indicated by the viewer are recorded in the secondary storage unit 103.

In this embodiment, the home server for recording the analog broadcast is described, but it is not so limited. Alternatively, the home server can be applied to a digital broadcast.

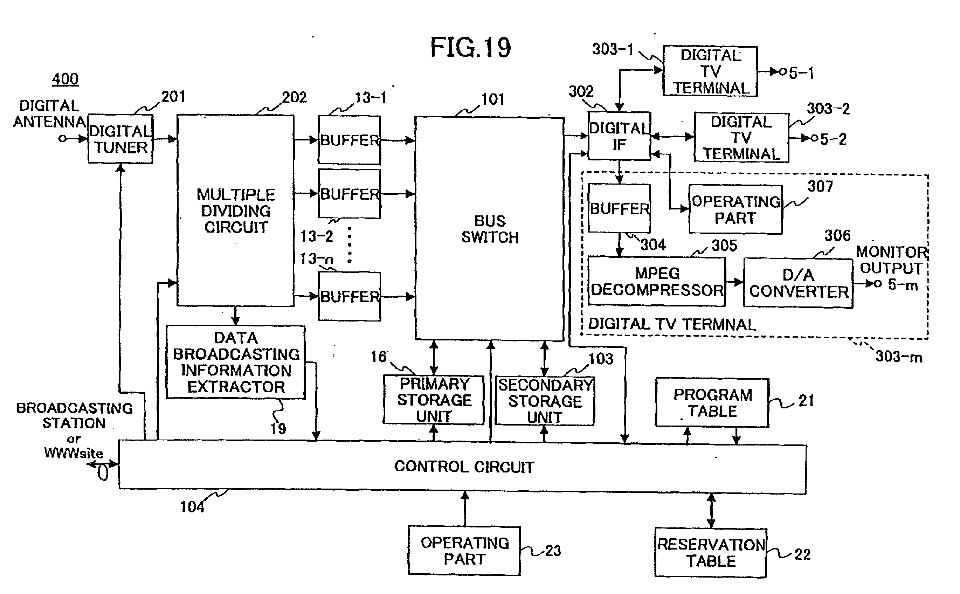

FIG.19 shows a block diagram showing a variation of the home server according to the second embodiment of the present invention. In FIG.19, those components that are the same as the components of FIG.15 and FIG.18 are designated by the same reference numerals, and the description thereof is omitted.

In a home server 400 according to the variation, broadcasts of n channels selected by the digital tuner 201 can be distributed to the monitors 5-1 through 5-m. In addition, the secondary recording is conducted to record the programs from the digital tuner 201 by the recording method shown in FIG.14, in response to an indication from the viewer.

In this embodiment, the home server distributes information recorded by the primary recording to a plurality of viewers inside the house, but the home server can be provided outside.

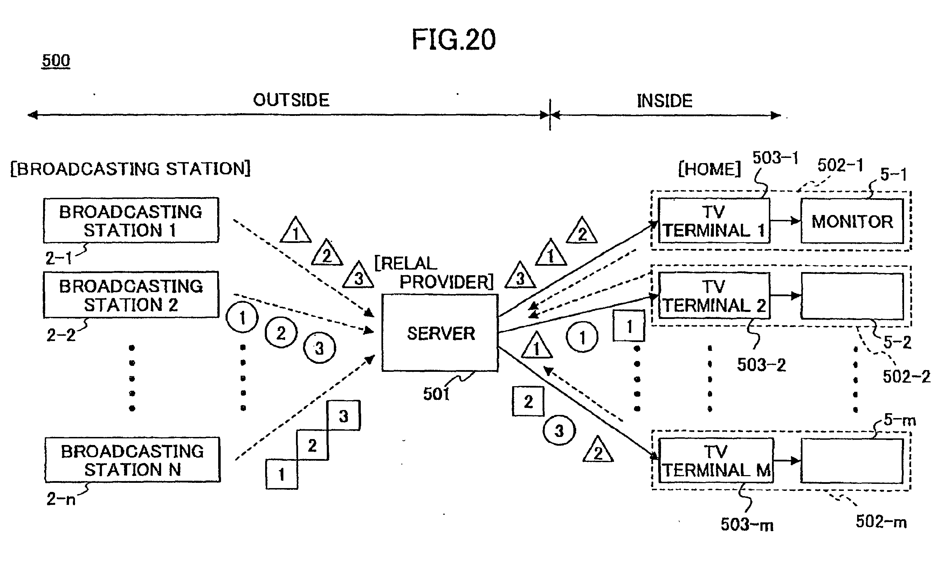

FIG.20 shows a block diagram of a system configuration according to a third embodiment of the present invention. In FIG.20, those components that are the same as the components of FIG.16 and FIG.17 are designated by the same reference numerals, and the description thereof is omitted.

In a broadcasting system 500, a server 501 provided outside of a house receives broadcasts from the broadcasting station 2-1 through 2-n, and conducts the primary recording and the secondary recording.

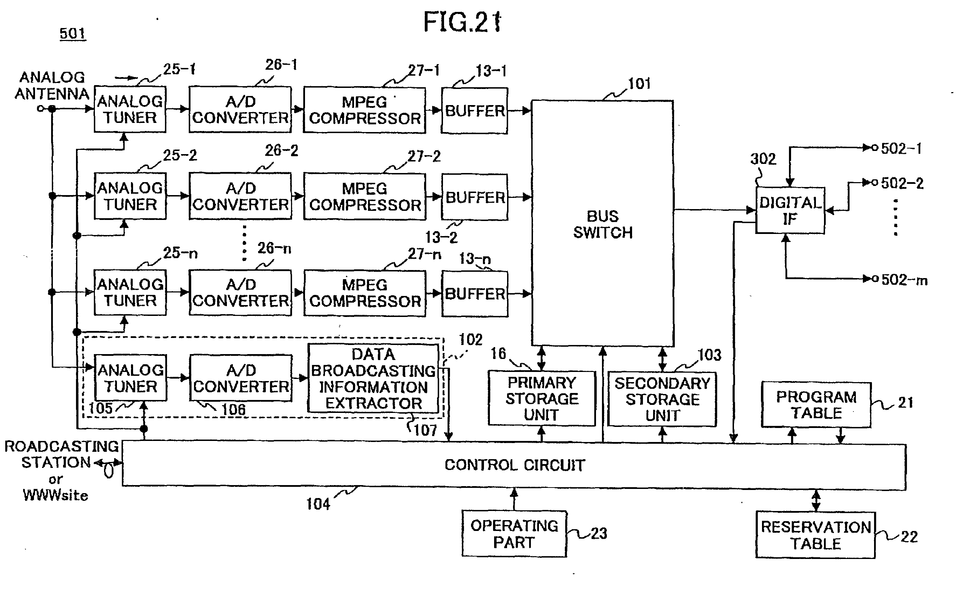

FIG.21 shows a block diagram of a configuration of a server according to the third embodiment of the present invention. In FIG.21, those components that are the same as the components of FIG.17 are designated by the same reference numerals, and the description thereof is omitted.

A server 501 connects to each of homes 502-1 through 502-m through the digital interface 302.

In each of homes 502-1 through 502-m, TV terminals 503-1 through 503-m are arranged. Configurations of the TV terminals 503-1 through 503-m are the same those of the digital TV terminals 303-1 through 303-m, and the description thereof is omitted.

According to this embodiment, it is not necessary to arrange the videocassette recorder to each of homes.

Next, a videocassette recorder for encrypting and recording an MPEG stream that is not encrypted will be described.

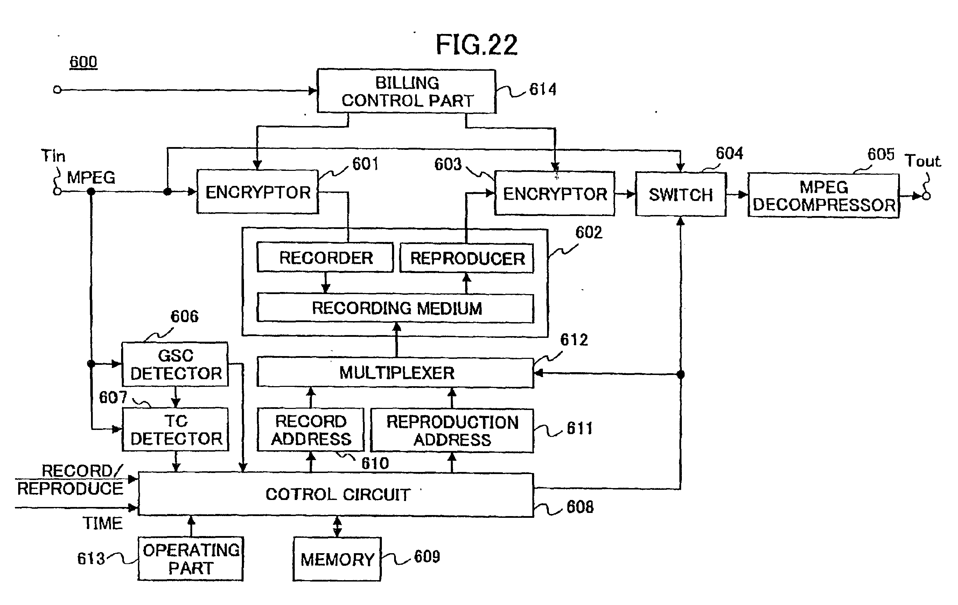

FIG.22 is a block diagram of a configuration of the videocassette recorder according to a fourth embodiment of the present invention.

A videocassette recorder 600 according to the embodiment includes an encrypting part 601, a recording/reproducing part 602, a decrypting part 603, a switching part 604, a decompressing part 605, a GSC (Group Start Code) detecting part 606, a TC (Time Code) detecting part 607, a control circuit 608, a memory 609, a record address generating part 610, a reproduction address generating part 611, a multiplexer 612, and a billing control part 614.

Data are supplied to an input terminal Tin. The data supplied to the input terminal Tin include a header and a data part, and the header includes a GSC (Group Start Code) and a TC (Time Code). The data part includes data on which an MPEG compression is conducted. The GSC is a code showing the beginning of the MPEG stream. The TC is a code showing the time of the MPEG stream.

The data supplied to the input terminal Tin are supplied to the encrypting part 601. The encrypting part 601 encrypts the data by corresponding to a shared key from the billing control part 614. The data that are encrypted are supplied to the recording/reproducing part 602.

The recording/reproducing part 602 includes a hard disk drive, and records the data from the encrypting part 601. Also, the recording/reproducing part 602 reproduces the data and supplies to the decrypting part 603. The decrypting part 603 decrypts the data encrypted by the encrypting part 601 by using the shared key supplied from the billing control part 614.

The data from the decrypting part 603 is supplied to the switching part 604. The switching part 604 controls to supply the data from the decrypting part 603 to the decompressing part 605.

The decompressing part 605 decompresses the MPEG compression and restores original image data. An output of the decompressing part 605 is output from the output terminal Tout.

Data are supplied from the input terminal Tin to the GSC detecting part 606. The GSC detecting part 606 detects a GSC from a header of input data. The GSC detected by the GSC detecting part 606 is supplied to the control circuit 608. In addition, the GSC detecting part 606 supplies a timing signal to the TC detecting part 607. The TC detecting part 607 detects the TC from the header of the input data in accordance with the timing signal from the GSC detecting 606.

The TC detected by the TC detecting part 606 is supplied to the control circuit 608. The control circuit 608 detects the beginning of data from the GSC and TC. The record address generating part 610 generates a record address of the data and supplies it to the recording/reproducing part 602. The reproduction address generating part 611 generates a reproduction address and supplies it to the recording/reproducing part 602.

The record address is supplied from the record address generating part 610 and the reproduction address is supplied from the reproduction address generating part 611 to the multiplexer 612. The multiplexer 612 selects the record address or the reproduction address in response to a signal from the control circuit 608, and supplies it to the recording/reproducing part 602.

The output data from the input terminal Tin and the decrypting part 603 are supplied to the switching part 604. The switching part 604 outputs data from the input terminal Tin or data from the decrypting part 603 in response to a switch controlling signal from the control circuit 608. The output data of the switching par 604 are supplied to the 'decompressing part 605. The decompressing part 605 decompresses data compressed by the MPEG to original data.

The memory 609 is connected to the control circuit 608, and stores the GSC detected by the GSC detecting part 606 and the TC detected by the TC detecting part 607.

A data structure of the memory 609 will now be described.

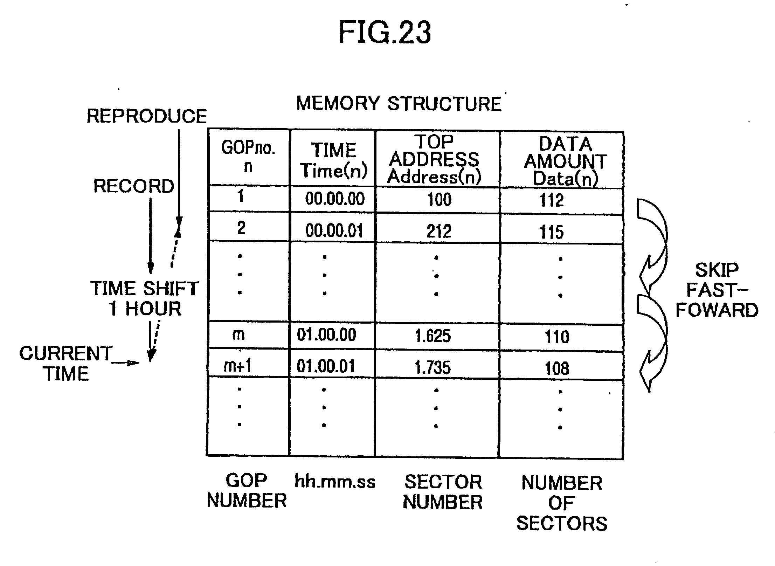

FIG.23 shows a data structure of the memory according to the fourth embodiment of the present invention.

The memory 609 stores a GOP number, a time, a beginning address, and a data amount. The GOP number is the number to identify the GOP. The time is the time to reproduce the GOP. The beginning address is the address of the recording/reproducing part 602 where a beginning of the GOP is recorded. The data amount is the data amount of the GOP.

The control circuit 608 executes a process that will be described later, based on data stored in the memory 609.

The operating part 613 indicates to the control circuit 608 to record or reproduce.

Next, the billing control part 614 will be described in detail.

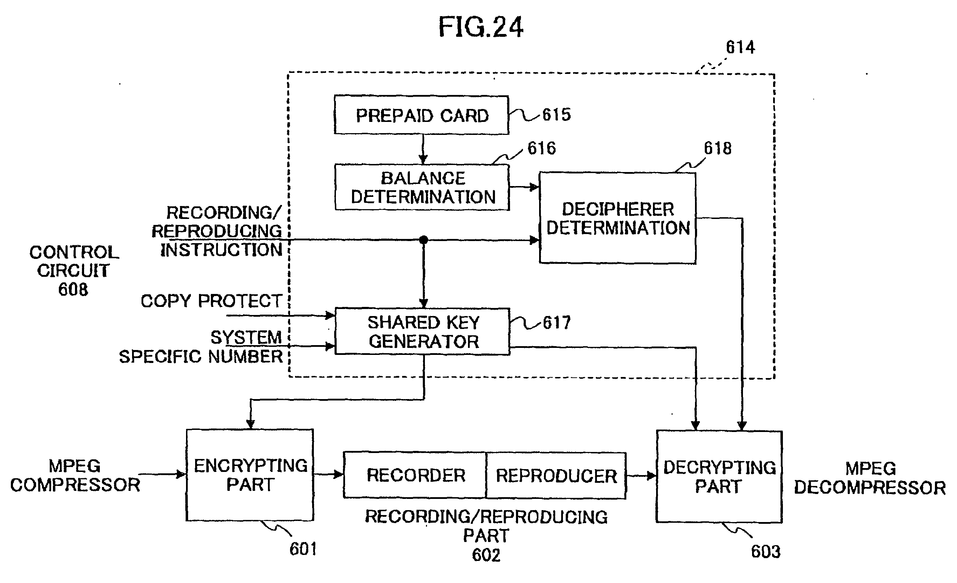

FIG.24 shows a block diagram of a configuration of the billing control part according to the fourth embodiment of the present invention.

The billing control part 614 includes a prepaid card 615, a balance determining part 616, a shared key generating part 617, and a decryption determining part 618.

The prepaid card 615 includes an IC card and records data corresponding to a payment amount from the viewer to a charged broadcasting station. The balance determining part 616 determines whether or not the prepaid card 615 has a balance large enough to view the charged broadcasting station, when the balance is enough, the balance determining part 616 deducts a view charge from the prepaid card 615 and outputs a determination result to allow decompressing, When the balance is not enough, the balance determining part 616 outputs a determination result to prohibit decompressing.

The determination result of the balance determining part 616 is supplied to the decryption determining part 618. The determination result of the balance determining part 616 and a recording/reproducing instruction from the control circuit 608 are supplied to the decryption determining part 618. If there is sufficient balance as the determination result of the balance determining part 616, the decryption determining part 618 allows the decrypting part 603 to decrypt a cipher in response to the reproduction instruction from the control circuit 608. On the other hand, if there is not a sufficient balance, the decryption determining part 618 prohibits the decrypting part 603 from decrypting the cipher.

Copy protect information, the system specific number, and the recording/reproducing instruction from the control circuit 608 are supplied to the shared key generating part 617. The shared key generating part 617 generates the shared key from the copy protect information and the system specific number in response to the recording/reproducing instruction. The shared key is supplied to the encrypting part 601 and the decryption determining part 618.

According to a billing method in this embodiment, since the image data are recorded in an encrypted state and a reproduction is allowed corresponding to the balance of the prepaid card 615, the billing can be properly conducted.

Next, an operation at a time of recording by the control circuit 608 will be described in detail.

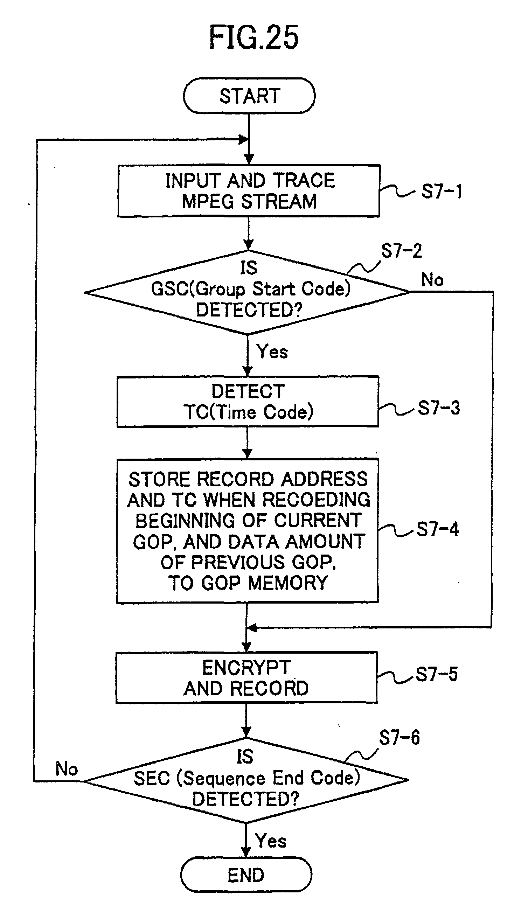

FIG.25 shows a flowchart for the operation at the time of recording according to the fourth embodiment of the present invention.

In step S7-1, the MPEG stream from the broadcasting station is input and next data are traced.

In step S7-2, it is determined whether or not the GSC is detected. When the GSC is detected in step S7-2, the operation advances to step S7-5.

In step S7-3, the TC is detected.

In step S7-4, the memory 609 stores the record address of the recording/reproducing part 602 for recording the beginning of the current GOP, the TC detected in step S7-4, and the data amount of a previous GOP.

In step S7-5, an encryption is conducted by the encrypting part 601, and also the GOP is recorded by the recording/reproducing part 602.

In step S7-6, it is determined whether or not a SEC (Sequence End Code) is detected from data of the MPEG stream. The SEC is a code showing final data of the MPEG stream.

Also, information stored in the memory 609 is encrypted by the encrypting part 601 and properly recorded to the recording/reproducing part 602.

Next, an operation at a time of reproduction will be described.

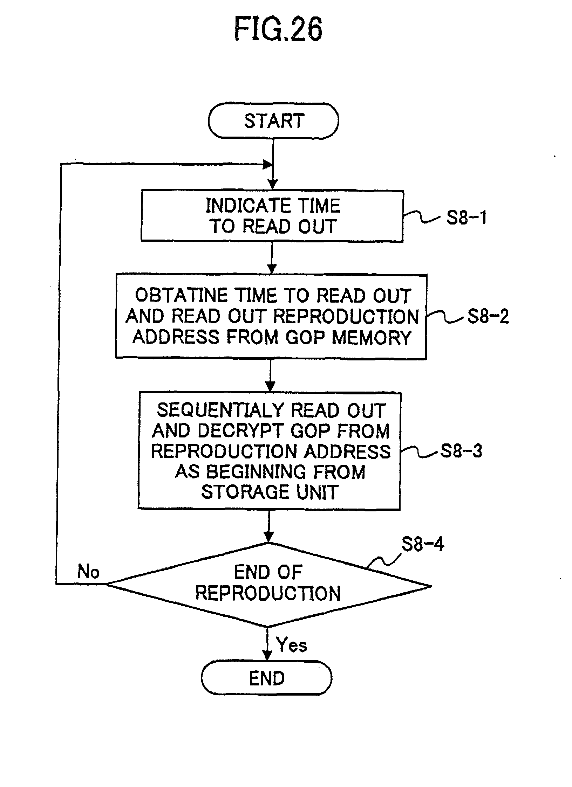

FIG.26 shows a flowchart for a process at the time of reproduction according to the fourth embodiment of the present invention.

In step S8-1, a time for data of the MPEG stream to be read out for the viewer is recognized. The viewer indicates the time to be read out in the MPEG stream by operating the operating part 613.

In step S8-2, the TC corresponding to the time recognized in step S8-1 is obtained, and the reproduction address corresponding to the TC is read out from the memory 609 or the recording/reproducing part 602.

In step S8-3, the process starts to sequentially read out the GOP from the reproduction address obtained in step S8-2 and to decrypt by the decrypting part 603.

In step S8-4, it is determined whether or not to stop reproducing. When it is determined in step S8-4 to stop reproducing, the reproducing process is terminated. On the other hand, when it is determined in step S8-4 not to stop reproducing, the reproducing process goes back to step S8-1 to continue.

Next, a case, in which an encrypted MPEG stream is supplied from the broadcasting station, will be described.

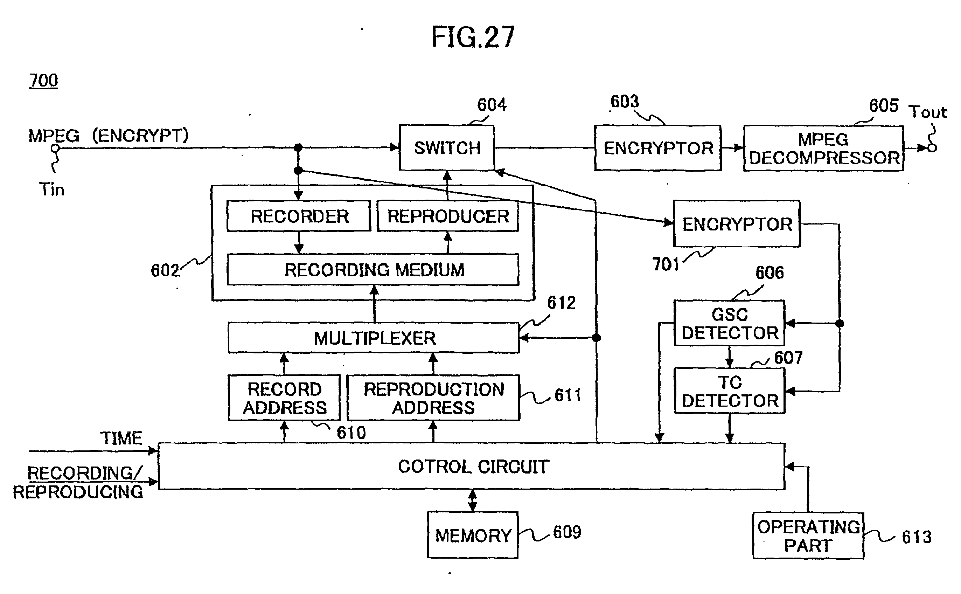

FIG.27 shows a block diagram of a configuration according to a fifth embodiment of the present invention. In FIG.27, those components that are the same as the components of FIG.22 are designated by the same reference numerals, and the description thereof is omitted.

A videocassette recorder 700 in this embodiment includes the decrypting part 701 and a billing control part 702. The decrypting part 701 decrypts the encrypted MPEG stream to be supplied to the input terminal Tin based on a decrypting key from the billing control part 702. Data decrypted by the decrypting part 701 are supplied to the GSC detecting part 606 and the TC detecting part 607.

Also, the encrypted MPEG stream to be supplied to the input terminal Tin remains to be encrypted, is recorded to the recording/reproducing part 602, and is reproduced.

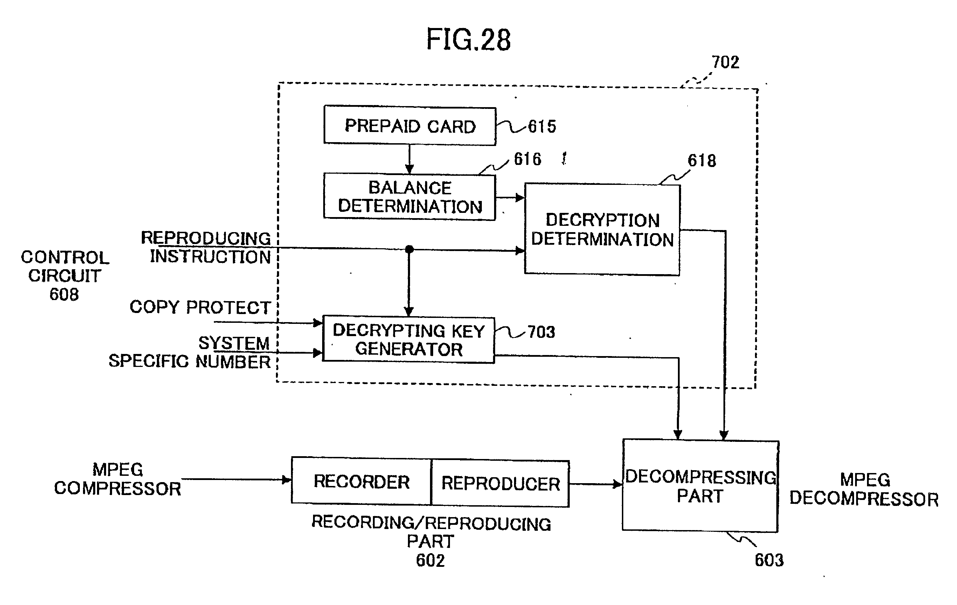

FIG.28 shows a block diagram of a configuration of the billing control part according to the fifth embodiment of the present invention. In FIG.28, those components that are the same as the components of FIG.24 are designated by the same reference numerals, and the description thereof is omitted.

The billing control part 702 includes a decrypting key generating part 703. The copy protect information, the system specific number, and the reproducing instructions are supplied to the decrypting key generating part 703. The decrypting key generating part 703 generates the decrypting key from the copy protect information and the system specific number.

Next, an operation at a time of recording in this embodiment will be described.

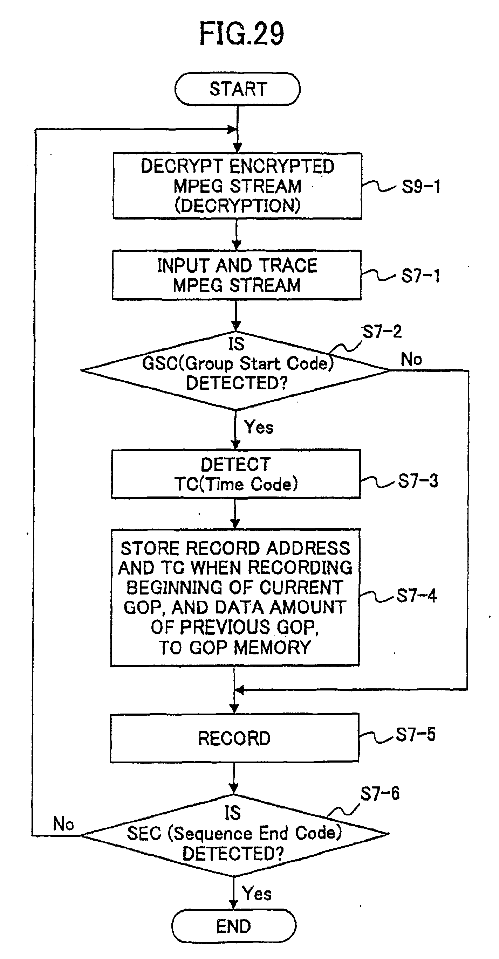

FIG.29 shows a flowchart at the time of recording according to the fifth embodiment of the present invention. In FIG.29, those components that are the same as the components of FIG.25 are designated by the same reference numerals, and the description thereof is omitted.

In step S9-1, the encrypted MPEG stream is decrypted by the decrypting part 701.

Steps S7-1 through S7-6 are executed as shown in FIG.23 by a decrypted MPEG stream in step S9-1.

Next, an operation at a time of a skip reproduction in this embodiment will be described.

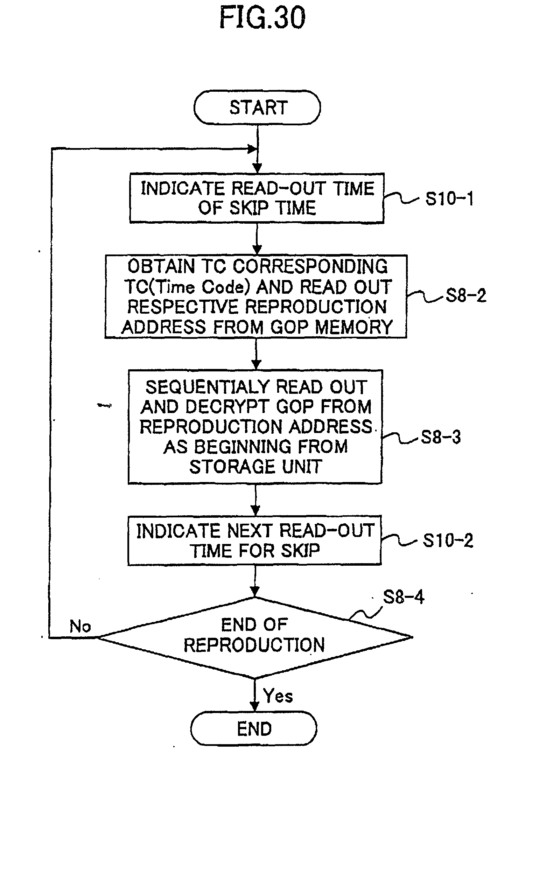

FIG.30 shows a flowchart at a time of reproducing according to the fifth embodiment of the present invention. In FIG.30, those components that are the same as the components of FIG.26 are designated by the same reference numerals, and the description thereof is omitted.

In step S10-1, a time of reading out and a skip time are recognized. The time of reading out and the skip time are determined by the viewer beforehand.

In step S10-2, a time skipped by the skip time recognized in step S10-1 is indicated to the time of reading out.

In step S8-4, it is determined whether or not to complete reproducing. When it is determined in step S8-4 that a reproduction is complete, the reproducing process is terminated. When it is determined in step S8-4 that the reproduction is not complete, the operation goes back to step S8-2 and reads out the GOP from the read address indicated in step S10-2.

According to the operation described above, for example, when double speed is indicated as the skip time by the viewer, one GOP is skipped. When a five times speed is indicated as the skip time by the viewer, four GOPs are skipped.

Next, a time shift operation in this embodiment will be described.

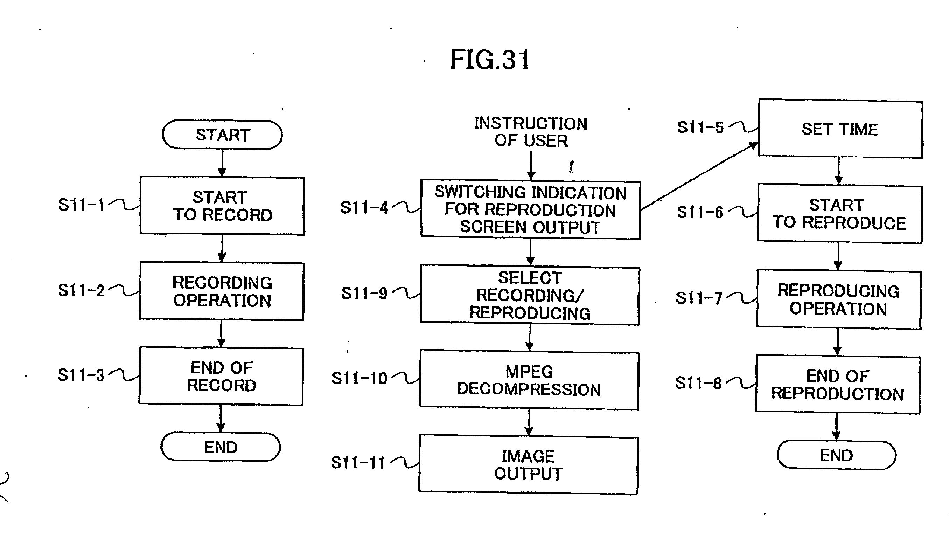

FIG.31 shows a flowchart at a time of a time shift reproduction according to the fifth embodiment. In step S11-1, the recording/reproducing part 602 is controlled to start to record.

In step S11-2, the recording/reproducing part 602 is controlled to record. The recording in step S11-2 is the same as the process in FIG.29.

In step S11-3, when a recording operation is complete in step S11-2, the recording process is terminated.

In step S11-4, in accordance with an indication of the viewer, a reproduction screen output is indicated to switch. While advancing the recording process, it is determined whether to output an image that the viewer is recording at present or to output a reproduced image by going back in time, and then the time shift operation advances to step S11-9. When switching from the recording to the reproducing, the time shift operation advances to step S11-5.

In step S11-5, a time desired to reproduce is recognized. The time desired to reproduce is indicated by the viewer.

In step S11-6, the recording/reproducing part 602 is controlled to start the reproducing process.

In step S11-7, the recording/reproducing part 602 is controlled to conduct the recording operation. The recording in step S11-7 is the same process in FIG.30.

In step S11-8, when the reproducing operation in step S11-7 is complete, the reproducing process is terminated.

In step S11-9, in accordance with the indication in step S11-4, the reproduction screen is switched. In a case of a record screen, the MPEG stream obtained by the recording process in step S11-2 is selected. In a case of the reproduction screen, the MPEG stream obtained by the reproducing process in step S11-7 is selected.

In step 511-10, the MPEG stream selected in step S11-9 is decompressed to be an image signal.

In step S11-11, the image signal decompressed in step S11-10 is output from the output terminal Tout.

In addition, when a temporary stop operation is conducted in the middle of reproduction, a current time or a record start time is indicated. Moreover, when the reproducing operation is conducted again, the reproducing operation is conducted from the record start time. As described above, it is possible to conduct a temporary stop for the image.

In this embodiment, the billing is charged to the prepaid card, but it is not limited to this. Alternatively, a billing method using a communication in another method can be applied.

As described above, according to this embodiment, a plurality of information sources are recorded to a first recording part. By an indicating part for indicating information simultaneously broadcast, it is possible to selectively view the information. The information, which is recorded to the first recording part by the reproducing part, can be reproduced and viewed.

Moreover, necessary information can be recorded from the information recorded in the first recording part, by a second recording part. The information is compressed by a compressing part and recorded to the first recording part, so as to record much information to the first recording part.

Furthermore, a decompressing part is provided, so that it is possible for the compressed information to be recorded/reproduced. By a record information setting part, it is possible to selectively set information and a time to be recorded by the first recording part.

Moreover, it is possible to easily recognize the information recorded to the first recording part by referring to a first timetable. It is possible to recognize and set information to be recorded to the first recording part beforehand by referring to a second timetable.

Furthermore, it is possible to easily record or set information desired to be viewed by referring to the first and the second timetables. It is possible to reduce an information amount to record from the first recording part to the second recording part by simultaneously recording information to the first and the second recording parts.

Moreover, in a case in which desired information is simultaneously recorded to the second recording part in the middle of recording the desired information to the first recording part, it is possible to reduce the recording time by recording a part of the desired information, which has not being recorded to the second recording information, from the first recording part to the second recording part. It is possible for each viewer to selectively use the first recording part.

Furthermore, effective management can be realized by sharing the first recording part with a plurality of monitors. It is possible to properly conduct the billing by recording information, which remains to be encrypted, to the recording/reproducing part.

Moreover, it is also possible to conduct with certainty the billing of information that is not encrypted but supplied. It is possible to control the viewer to view information corresponding to a billing state by controlling the decompressing part corresponding to the billing state.

Furthermore, the encryption is not necessary at the apparatus side. It is possible to record while reproducing and it is possible to view in a flexible state.

## Claims

1. An information recording/reproducing apparatus for recording information from a plurality of information sources, comprising:
a first recording part recording a plurality of sets of information from the plurality of information sources;
an indicating part indicating desired information; and
a read-out controlling part reading out the desired information indicated by the indicating part.

2. The information recording/reproducing apparatus as claimed in claim 1, further comprising a reproducing part reproducing information read out from the read-out controlling part.

3. The information recording/reproducing apparatus as claimed in claim 1 or 2, further comprising a second recording part recording information read out from the read-out controlling part.

4. The information recording/reproducing apparatus as claimed in claim 2, further comprising a compressing part compressing the plurality of sets of information and supplying to said first recording part.

5. The information recording/reproducing apparatus as claimed in claim 4, further comprising a decompressing part decompressing information from said reproducing part.

6. The information recording/reproducing apparatus as claimed in any one of claims 1 through 5, further comprising a recording information setting part setting the plurality of sets of information and a time to be recorded to said first recording part.

7. The information recording/reproducing apparatus as claimed in any one of claims 1 through 6, further comprising a first timetable creating part creating an information table based on a plurality of sets of information recorded in the first recording part.

8. The information recording/reproducing apparatus as claimed in any one of claims 1 through 7, further comprising a second timetable creating part creating an information table based on transmission schedule information supplied from the plurality of information sources beforehand.

9. The information recording/reproducing apparatus as claimed in claim 8, further comprising a read-out information setting part setting the desired information based on the first and the second timetables created by the first and the second creating part.

10. The information recording/reproducing apparatus as claimed in any one of claims 3 through 9, said second recording part simultaneously records desired information from information being recorded to said first recording part.

11. The information recording/reproducing apparatus as claimed in any one of claims 3 through 10, wherein when recording in a middle of the desired information, the second recording part records the desired information in information being recorded by the first recording part at one time, and when completing recording the desired information, the second recording part records a part of the desired information that has not been recorded, from the first recording part.

12. The information recording/reproducing apparatus as claimed in any one of claims 3 through 11, wherein said first recording part is provided for each viewer.

13. The information recording/reproducing apparatus as claimed in any one of claims 1 through 11, wherein said first recording part is shared with a plurality of viewers.

14. An information recording/reproducing apparatus for recording/reproducing information, comprising:
a recording/reproducing part recording/reproducing encrypted information;
a decrypting part decrypting information reproduced by said recording/reproducing part; and
a billing control part prohibiting decrypting by said decrypting part in accordance with a billing state.

15. The information recording/reproducing apparatus as claimed in claim 14, further comprising an encrypting part encrypting information supplied from an external unit.

16. The information recording/reproducing apparatus as claimed in claim 14 or 15, wherein said billing control part comprises:
a billing determining part determining the billing state;
an encrypting key generating part generating and supplying an encrypting key to said decrypting part; and
a decryption permitting part permitting to decrypt by the decrypting part when it is determined that the billing is charged by said billing determining part.

17. The information recording/reproducing apparatus as claimed in claim 14, wherein the information is encrypted beforehand.

18. The information recording/reproducing apparatus as claimed in any one of claims 14 through 17, wherein said recording/reproducing part simultaneously records and'reproduces the information.
